# EUROPÄISCHE PATENTSCHRIFT

(11) **EP 3 045 228 B1**
(45) Veröffentlichungstag und Bekanntmachung des Hinweises auf die Patenterteilung: **29.11.2017**
(21) Anmeldenummer: 15150884.3
(22) Anmeldetag: 13.01.2015
(51) Int. Cl.: B03D 1/02, B03D 1/14

(54) **Mikroflotationsanlage mit einer Entspannungsventilanordnung und Verfahren zum Betreiben einer Mikroflotationsanlage**
Microflotation assembly with a relaxation valve assembly and method for operating a microflotation assembly
Installation de micro-flottation dotée d'un système de soupapes de décompression et procédé de fonctionnement d'une installation de micro-flottation

(43) Veröffentlichungstag der Anmeldung: 20.07.2016
(73) Patentinhaber: Damann, Roland, 33106 Paderborn (DE)
(72) Erfinder: Damann, Roland, 33106 Paderborn (DE)
(74) Vertreter: Hauck Patentanwaltspartnerschaft mbB

(56) Entgegenhaltungen:
- WO-A1-2008/147050
- WO-A1-2016/018504
- DE-A1-102011 005 031
- DE-A1-102011 077 104
- KIM SUNG-JOON ET AL: "Microbubble-inducing characteristics depending on various nozzle and pressure in dissolved air flotation process", KSCE JOURNAL OF CIVIL ENGINEERING, KOREAN SOCIETY OF CIVIL ENGINEERS, HEIDELBERG, Bd. 19, Nr. 3, 15. September 2014 (2014-09-15), Seiten 558-563, XP035454114, ISSN: 1226-7988, DOI: 10.1007/S12205-013-0514-7 [gefunden am 2014-09-15]
- R. B. MORUZZI ET AL: "Characterization of micro-bubble size distribution and flow configuration in DAF contact zone by a non-intrusive image analysis system and tracer tests", WATER SCIENCE & TECHNOLOGY, Bd. 61, Nr. 1, 1. Januar 2010 (2010-01-01) , Seite 253, XP055104462, ISSN: 0273-1223, DOI: 10.2166/wst.2010.784
- COUTO H J B ET AL: "Micro-bubble size distribution measurements by laser diffraction technique", MINERALS ENGINEERING, PERGAMON PRESS , OXFORD, GB, Bd. 22, Nr. 4, 1. März 2009 (2009-03-01), Seiten 330-335, XP025951579, ISSN: 0892-6875, DOI: 10.1016/J.MINENG.2008.09.006 [gefunden am 2008-11-08]
- RODRIGUES R T ET AL: "New basis for measuring the size distribution of bubbles", MINERALS ENGINEERING, PERGAMON PRESS , OXFORD, GB, Bd. 16, Nr. 8, 1. August 2003 (2003-08-01) , Seiten 757-765, XP027537572, ISSN: 0892-6875 [gefunden am 2003-08-01]
- TERUO TAKAHASHI ET AL: "FUNDAMENTAL STUDY OF BUBBLE FORMATION IN DISSOLVED AIR PRESSURE FLOTATION", JOURNAL OF CHEMICAL ENGINEERING OF JAPAN, Bd. 12, Nr. 4, 1. Januar 1979 (1979-01-01) , Seiten 275-280, XP055200078, ISSN: 0021-9592, DOI: 10.1252/jcej.12.275
- CHEN F-T ET AL: "Bubble performance of a novel dissolved air flotation (DAF) unit", JOURNAL OF ENVIRONMENTAL SCIENCES, ELSEVIER BV, NL, Bd. 16, Nr. 1, 1. Januar 2004 (2004-01-01) , Seiten 104-107, XP009128561, ISSN: 1001-0742

## Beschreibung

Die Erfindung betrifft eine Mikroflotationsanlage mit einem Flotationsbecken, in das mit einem Gas angereichertes Dispersionswasser über eine Dispersionswasserzuleitung eingeleitet wird, in der ein Entspannungsventil angeordnet ist. Bei der Entspannung des Dispersionswassers bilden sich Mikroblasen, die langsam in dem Flotationsbecken aufsteigen und sich dabei an Verunreinigungen anlagern und diese an die Oberfläche des Flotationsbeckens transportieren. Solche Mikroflotationsanlagen sind zur Reinigung der unterschiedlichsten Abwässer geeignet und zeichnen sich grundsätzlich durch einen weitgehend wartungsfreien und kostengünstigen Betrieb aus.
Bei den meisten bekannten Mikroflotationsanlagen kann die Menge des dem Flotationsbecken zugeführten Dispersionswassers durch eine einmalige Einstellung eines Entspannungsventils justiert werden. Ein Richtwert lautet, dass für eine zufriedenstellende Reinigung etwa 10 Liter Dispersionswasser pro Kilogramm Feststoffgehalt des Abwassers zugeführt werden müssen.
Aus dem US-Patent Nr. 5,693,222 ist bekannt geworden, eine Trübung des in einer Mikroflotationsanlage gereinigten Abwassers zu messen und bei starker Trübung ein Entspannungsventil so anzusteuern, dass mehr Gas zugeführt wird. Auf diese Weise wird ein optimales Gas-Feststoff-Verhältnis angestrebt.

Aus Kim Sung-Joon et al. "Microbubble-inducing characteristics depending on various nozzle and pressure in dissolved air flotation process", KSCE Journal of Civil Engineering (2015) 19(3):558-563 (DOI: 10.1007/s12205-013-0514-7) ist bekannt, die Mikroblasengrößenverteilung zu messen und sie in Abhängigkeit der Düsenöffnungsgröße der DAF Düse oder in Abhängigkeit des Sättigungsdrucks zu regeln.

Aus Takahashi et al. "Fundamental study of bubble formation in dissolved air flotation", Journal of Chemical Engineering of Japan, (1979) Vol. 12, No. 4, p. 275-280 (DOI: 10.1252/ jcej. 12.275) ist bekannt, dass zahlreiche Einflussgrößen die Mikroblasenbildung beeinflussen.

Davon ausgehend ist es die Aufgabe der Erfindung, eine Mikroflotationsanlage zur Verfügung zu stellen, die unter wechselnden Betriebsbedingungen eine optimale Reinigungswirkung erzielt und zugleich besonders effizient arbeitet, sowie ein entsprechendes Verfahren zum Betreiben einer Mikroflotationsanlage.

Diese Aufgabe wird gelöst durch die Mikroflotationsanlage mit den Merkmalen des Anspruchs 1. Vorteilhafte Ausgestaltungen sind in den sich anschließenden Unteransprüchen angegeben.

Die Mikroflotationsanlage hat
- ein Flotationsbecken, das eine Dispersionswasserzuleitung aufweist, in der eine Entspannungsventilanordnung angeordnet ist,
- eine Verstelleinrichtung, mit der eine Durchflussmenge der Entspannungsventilanordnung einstellbar ist, und
- eine elektronische Steuerung, die mit der Verstelleinrichtung verbunden ist, wobei
- stromabwärts der Entspannungsventilanordnung eine Messeinrichtung zur Erfassung einer Größenverteilung von Gasblasen angeordnet ist und
- die elektronische Steuerung mit der Messeinrichtung verbunden und dazu ausgebildet ist, die Durchflussmenge in Abhängigkeit von einer mit der Messeinrichtung erfassten Größenverteilung einzustellen.

Im Betrieb der Mikroflotationsanlage wird dem Flotationsbecken über die Dispersionswasserzuleitung Dispersionswasser zugeführt. Dabei handelt es sich um Wasser, das unter einem erhöhten Druck steht und in dem ein Gas gelöst ist, im Idealfall mit einer Sättigungskonzentration. Das Gas kann insbesondere Luft sein. Auf dem Weg in das Flotationsbecken strömt das Dispersionswasser durch die Entspannungsventilanordnung, wobei der Druck im Wesentlichen bis auf den Umgebungsdruck absinkt, was zu der erwünschten Mikroblasenbildung führt.

Die Durchflussmenge des Dispersionswassers durch die Dispersionswasserzuleitung ist mit Hilfe der Verstelleinrichtung einstellbar. Diese Einstellung hat einen maßgeblichen Einfluss auf das Größenspektrum der bei der Entspannung entstehenden Gasblasen. Für viele Anwendungen ist es von Vorteil, wenn die Gasblasen zum Großteil Durchmesser im Bereich von etwa 20 µm bis etwa 50 µm aufweisen. Tatsächlich wird das sich einstellende Größenspektrum jedoch von einer Vielzahl schwankender und schwer erfassbarer Parameter beeinflusst. Hierzu zählen unter anderem der pH-Wert, der Salzgehalt, der Fett-/Ölgehalt, der chemische Sauerstoffbedarf (CSB), die Trübung, das Redoxpotential, der Sauerstoffgehalt und der Feststoffgehalt des zur Herstellung des Dispersionswassers verwendeten Wassers. Da dieses Wasser häufig einem Klarwasserauslauf des Flotationsbeckens entnommen wird, können die genannten Eigenschaften des Wassers unter anderem stark durch die Zusammensetzung des zu behandelnden Abwassers beeinflusst werden. Die genannten Parameter können die Größenverteilung der Gasblasen unmittelbar oder mittelbar beeinflussen, beispielsweise durch eine mehr oder weniger ausgeprägte Beeinträchtigung oder Förderung der Löslichkeit des Gases in dem Wasser.

Bei der Erfindung ist stromabwärts der Entspannungsventilanordnung eine Messeinrichtung angeordnet, mit der eine Größenverteilung der Gasblasen erfasst wird. Eine elektronische Steuerung stellt die Durchflussmenge in Abhängigkeit der erfassten Größenverteilung ein. Auf diese Weise kann einer unerwünschten Veränderung der Größenverteilung, die beispielsweise infolge einer veränderten Zusammensetzung des zu reinigenden Abwassers auftreten kann, entgegengewirkt werden. Dadurch kann die Mikroflotationsanlage stets mit einer zu einer optimalen Reinigungswirkung und größtmöglichen Effizienz führenden Größenverteilung der Gasblasen betrieben werden.

Mit der Größenverteilung der Gasblasen ist eine relative Häufigkeit unterschiedlicher Gasblasengrößen gemeint. Zusätzlich kann auch die absolute Häufigkeit der Gasblasen unterschiedlicher Größen und/oder das Gesamtvolumen der Gasblasen erfasst werden. In diesem Fall kann auch die insgesamt eingeleitete Gasmenge erfasst und ggf. angepasst werden, um eine optimale Reinigungswirkung und Effizienz zu erzielen.

In einer Ausgestaltung ist die elektronische Steuerung dazu ausgebildet, die Durchflussmenge zu verringern, wenn die Größenverteilung ein vorgegebenes Größenmaß überschreitet. Als Größenmaß eignen sich unterschiedliche statistische Kennwerte der erfassten Größenverteilung, beispielsweise ein Mittelwert der Blasengroße, ein Median der Größenverteilung oder ein statistisches Maß für die Breite der Größenverteilung. Diese Ausgestaltung beruht auf der Erkenntnis, dass übergroße Blasen insbesondere dann entstehen, wenn es bei der Aufbereitung des Dispersionswassers zu einer Übersättigung gekommen ist. Durch das Verringern der Durchflussmenge kann diesem Effekt entgegengewirkt werden, weil der Druck stromaufwärts der Entspannungsventilanordnung - insbesondere in einem zur Aufbereitung des Dispersionswassers verwendeten Reaktorbehälter - ansteigt, sodass das Wasser mehr Gas aufnehmen kann. Im Ergebnis wird eine Übersättigung des Dispersionswassers vermieden und die Größenverteilung der entstehenden Gasblasen verschiebt sich hin zu kleineren Gasblasen.

In einer Ausgestaltung ist die elektronische Steuerung dazu ausgebildet, durch Steuern der Durchflussmenge die Größenverteilung auf ein vorgegebenes Soll-Größenmaß zu regeln. Beispielsweise kann ein Sollwert für die mittlere Blasengröße oder für einen Median der Blasengröße oder für einen sonstigen statistischen Kennwert der Größenverteilung vorgegeben werden. Auf Grundlage der erfassten Größenverteilung wird der Istwert dieses Größenmaßes bestimmt und mit dem Soll-Größenmaß verglichen. Abweichungen wird durch entsprechendes Steuern der Durchflussmenge entgegengewirkt. Auf diese Weise kann die Mikroflotationsanlage stets mit einer als optimal erkannten Größenverteilung der Gasblasen betrieben werden, was gleichermaßen die Reinigungsleistung und die Effizienz steigert.

In einer Ausgestaltung weist die Messeinrichtung einen Partikelzähler auf. Partikelzähler sind aus anderen industriellen Anwendungen bekannt und können zum Erfassen der Größenverteilung von Partikeln, also Feststoffen, in Flüssigkeiten oder Gasen verwendet werden. Ebenfalls möglich ist eine Erfassung der Größenverteilung von feinsten Flüssigkeitströpfchen in Dispersionen. Der Erfinder hat erkannt, dass derartige Partikelzähler auch zur Erfassung der Größenverteilung von Gasblasen in Flüssigkeiten eingesetzt werden können. Unter Verwendung eines Partikelzählers ist die gewünschte Erfassung der Größenverteilung der Gasblasen kostengünstig und zuverlässig möglich.

In einer Ausgestaltung ist die Messeinrichtung dazu ausgebildet, die Größenverteilung mittels Laserbeugung zu erfassen. Hierzu wird das zugeführte Dispersionswasser mit den Gasblasen mit Laserlicht beleuchtet und es wird ein Beugungsbild erfasst. Durch mathematische Auswertung des Beugungsbilds kann die Größenverteilung ermittelt werden. Eine kommerziell erhältliche Messeinrichtung, die nach diesem Prinzip arbeitet, ist das Prozess-Partikelgrößenmessgerät "Insitec Wet" des englischen Anbieters Malvern Instruments Ltd.

In einer Ausgestaltung ist die Messeinrichtung zwischen der Entspannungsventilanordnung und einem Dispersionswasserzulauf des Flotationsbeckens angeordnet. Dies ermöglicht eine besonders aussagekräftige Charakterisierung der Gasblasen, da eine Durchmischung mit dem zu reinigenden Abwasser innerhalb des Flotationsbeckens vermieden wird. Grundsätzlich ist eine Anordnung der Messeinrichtung jedoch auch innerhalb des Flotationsbeckens denkbar.

In einer Ausgestaltung weist die Dispersionswasserzuleitung eine Abzweigleitung auf, durch die ein Teilstrom des Dispersionswassers geführt wird, und die Messeinrichtung ist in der Abzweigleitung angeordnet. Dies ermöglicht eine gezielte Anpassung insbesondere der Strömungsgeschwindigkeit und des Strömungsquerschnitts des für die Messung herangezogenen Dispersionswassers an den optimalen Messbereich der Messeinrichtung und kann das Erfassen der Größenverteilung vereinfachen. Die Abzweigleitung zweigt stromabwärts der Entspannungsventilanordnung von der Dispersionswasserzuleitung ab. Stromabwärts der in der Abzweigleitung angeordneten Messeinrichtung kann die Abzweigleitung unmittelbar in das Flotationsbecken münden. Alternativ kann die Abzweigleitung stromabwärts der Messeinrichtung wieder mit einem stromabwärts eines Abzweigpunkts angeordneten Leitungsabschnitts der Dispersionswasserzuleitung vereinigt werden, sodass Hauptstrom und Teilstrom gemeinsam über einen Dispersionswasserzulauf in das Flotationsbecken eingeleitet werden können. In diesem Fall bildet die Abzweigleitung einen Bypass.

In einer Ausgestaltung weist die Mikroflotationsanlage einen Reaktorbehälter auf, der einen Wasserzulauf aufweist und dazu ausgebildet ist, über den Wasserzulauf zugeführtes Wasser unter erhöhtem Druck mit einem Gas anzureichern und das so gebildete Dispersionswasser an einem Dispersionswasserauslauf, der mit der Dispersionswasserzuleitung verbunden ist, zur Verfügung zu stellen. Auf diese Weise wird die Aufbereitung des Dispersionswassers in die Mikroflotationsanlage einbezogen.

In einer Ausgestaltung weist die Entspannungsventilanordnung ein Entspannungsventil mit einem verstellbaren Öffnungsgrad auf und die Verstelleinrichtung weist einen Stellantrieb auf, mit dem der Öffnungsgrad verstellbar ist. Der Stellantrieb kann beispielsweise ein Schrittmotor sein. Das Entspannungsventil kann beispielsweise ein Kegelventil sein. Auf diese Weise kann die Durchflussmenge mit einfachen Mitteln exakt und zuverlässig eingestellt werden.

Die oben genannte Aufgabe wird ebenfalls gelöst durch das Verfahren mit den Merkmalen des Anspruchs 10. Vorteilhafte Ausgestaltungen des Verfahrens sind in den sich anschließenden Unteransprüchen angegeben.

Das Verfahren dient zum Betreiben einer Mikroflotationsanlage und weist die folgenden Schritte auf:
- Zuführen von Dispersionswasser über eine Entspannungsventilanordnung in ein Flotationsbecken,
- Erfassen einer Größenverteilung von Gasblasen stromabwärts der Entspannungsventilanordnung mit einer Messeinrichtung,
- automatisches Steuern einer Durchflussmenge der Entspannungsventilanordnung in Abhängigkeit von der erfassten Größenverteilung.

Das Verfahren kann insbesondere zum Betreiben einer Mikroflotationsanlage mit den Merkmalen eines der Ansprüche 1 bis 9 eingesetzt werden. Zur Erläuterung der Merkmale und Vorteile des Verfahrens wird auf die vorstehenden Erläuterungen der Mikroflotationsanlage verwiesen, die entsprechend gelten. Insbesondere kann jedes der im Zusammenhang mit der Mikroflotationsanlage erläuterten Merkmale mit dem Verfahren kombiniert werden.

Mit einem automatischen Steuern der Durchflussmenge der Entspannungsventilanordnung ist gemeint, dass die Durchflussmenge wahlweise über einen längeren Zeitraum ohne einen manuellen Eingriff vorgenommen werden kann, insbesondere von der vorstehend bereits erläuterten elektronischen Steuerung.

In einer Ausgestaltung wird die Durchflussmenge verringert, wenn die Größenverteilung ein vorgegebenes Größenmaß überschreitet. Hierzu wird auf die vorstehenden Erläuterungen der korrespondierenden Merkmale der Mikroflotationsanlage verwiesen.

In einer Ausgestaltung wird die Größenverteilung durch Steuern der Durchflussmenge auf ein vorgegebenes Soll-Größenmaß geregelt. Hierzu wird auf die vorstehenden Erläuterungen der korrespondierenden Merkmale der Mikroflotationsanlage verwiesen.

In einer Ausgestaltung wird das zugeführte Dispersionswasser in einen Teilstrom und einen Hauptstrom aufgeteilt und das Erfassen der Größenverteilung erfolgt in dem Teilstrom. Hierzu wird auf die vorstehenden Erläuterungen im Zusammenhang mit der Abzweigleitung verwiesen, die entsprechend gelten.

In einer Ausgestaltung wird zum Erfassen der Größenverteilung ein Laserbeugungsbild ausgewertet. Auch hierzu wird auf die vorstehenden Erläuterungen zur Laserbeugung verwiesen.

Die Erfindung wird nachfolgend anhand eines in Figuren dargestellten Ausführungsbeispiels näher erläutert.
- Fig. 1: zeigt eine erfindungsgemäße Mikroflotationsanlage in einer schematischen Darstellung.
- Fig. 2: zeigt ein Diagramm zu einer erfassten Größenverteilung der erzeugten Gasblasen.

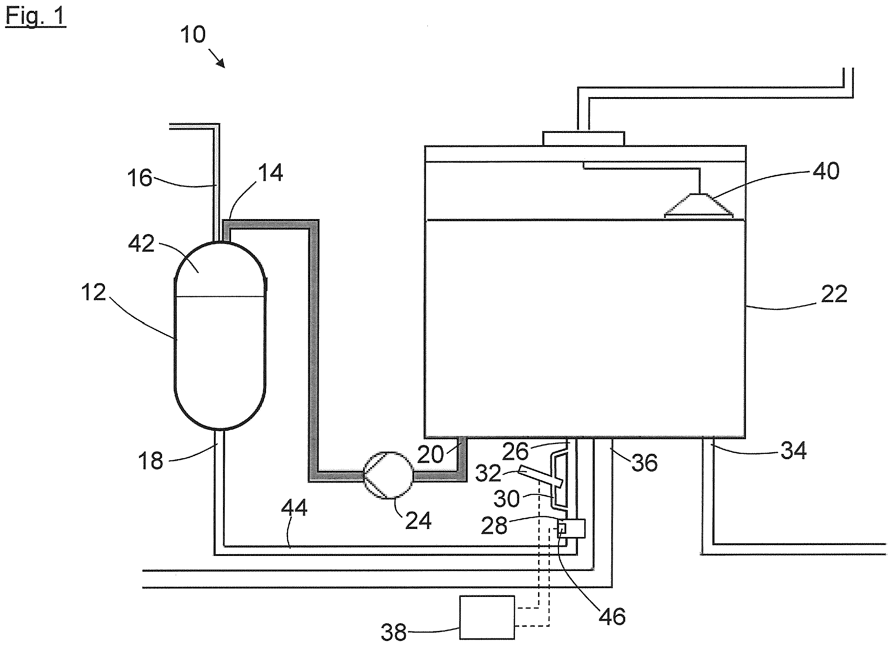

Die Mikroflotationsanlage 10 in Figur 1 weist einen Reaktorbehälter 12 auf, dem über einen Wasserzulauf 14 Wasser zugeführt wird. Über eine Gasleitung 16 wird dem Reaktorbehälter 12 außerdem ein Gas, insbesondere Luft, zugeführt. In dem Reaktorbehälter 12, der unter einem erhöhten Druck steht, beispielsweise im Bereich von 1,5 bar bis 4 bar, wird das Gas mit dem Wasser gemischt, sodass sich das Gas in dem Wasser löst. Oberhalb des angedeuteten Wasserspiegels befindet sich ein Gaspolster 42. Das im Idealfall mit dem Gas gesättigte Wasser wird als Dispersionswasser bezeichnet und kann dem Reaktorbehälter 12 über den Dispersionswasserauslauf 18 entnommen werden.

Der Wasserzulauf 14 ist über eine Leitung mit einem Klarwasserauslauf 20 eines Flotationsbeckens 22 der Mikroflotationsanlage verbunden. In der Leitung ist eine Pumpe 24 angeordnet. Das Flotationsbecken 22 weist außerdem einen Dispersionswasserzulauf 26 auf, der über eine Dispersionswasserzuleitung 44, in der eine Entspannungsventilanordnung 28 angeordnet ist, mit dem Dispersionswasserauslauf 18 des Reaktorbehälters 12 verbunden ist. Auf diese Weise wird das Dispersionswasser dem Flotationsbecken 22 zugeführt.

Beim Durchströmen der Entspannungsventilanordnung 28 kommt es zu einer Druckentspannung und infolgedessen zu einer Bildung von Mikroblasen, die in dem Flotationsbecken 22 langsam aufsteigen, sich dabei an Verunreinigungen anlagern und diese an die Oberfläche tragen. Dort wird das sich auf diese Weise bildende Flotat von einer Räumeinrichtung 40 abgesaugt.

Das zu reinigende Schmutzwasser wird dem Flotationsbecken 22 über einen Schmutzwasserzulauf 36 zugeführt. Das gereinigte Abwasser kann dem Flotationsbecken 22 über den weiteren Klarwasserauslauf 34 zur weiteren Verwendung entnommen werden.

Bei der Erfindung ist stromabwärts der Entspannungsventilanordnung 28 eine Messeinrichtung 32 zur Erfassung einer Größenverteilung der erzeugten Gasblasen angeordnet. Die Messeinrichtung 32 weist einen nicht dargestellten Partikelzähler auf, der die Größenverteilung der Gasblasen mittels Laserbeugung erfasst.

Die Messeinrichtung 32 ist in einer Abzweigleitung 30 angeordnet, die stromabwärts der Entspannungsventilanordnung 28 von der Dispersionswasserzuleitung 44 abzweigt. Stromabwärts der Messeinrichtung 32 wird die Abzweigleitung 30 wieder mit der Dispersionswasserzuleitung 44, die zwischen den beiden Verbindungspunkten mit der Abzweigleitung einen Hauptstrom des Dispersionswassers führt, vereint. Teilstrom und Hauptstrom des Dispersionswassers werden über den Dispersionswasserzulauf 26 in das Flotationsbecken 22 eingeleitet.

Die Messeinrichtung 32 ist mit einer elektronischen Steuerung 38 verbunden. Die Entspannungsventilanordnung 28 weist eine Verstelleinrichtung 46 auf, die ebenfalls mit der elektronischen Steuerung 38 verbunden ist. Die beiden genannten Verbindungen sind durch gestrichelte Linien angedeutet.

Die elektronische Steuerung 38 ist dazu ausgebildet, die Durchflussmenge der Entspannungsventilanordnung 28 in Abhängigkeit einer von der Messeinrichtung 32 erfassten Größenverteilung der Gasblasen einzustellen.

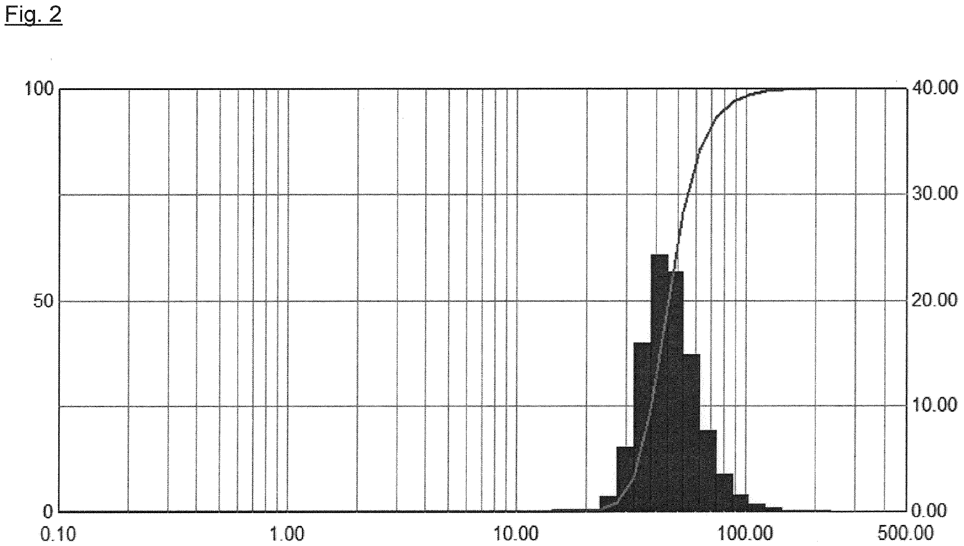

Figur 2 zeigt beispielhaft ein Diagramm einer von der Messeinrichtung 32 erfassten Größenverteilung der erzeugten Gasblasen. Auf der horizontalen Achse ist der Durchmesser der Gasblasen in Mikrometer aufgetragen. Die linke, vertikale Achse bezieht sich auf die in dem Diagramm mit einer durchgezogenen Linie eingezeichnete Kurve und zeigt das kumulative Volumen der Gasblasen in Prozent. Beispielsweise lässt sich der Kurve entnehmen, dass die Gasblasen mit einem Durchmesser von 50 µm oder weniger etwa 50 % des gesamten Gasvolumens ausmachen.

Die rechts aufgetragene, vertikale Achse bezieht sich auf die in dem Diagramm eingezeichneten Balken und beschreibt die Volumenfrequenz der Gasblasen in Prozent. Der längste in dem Diagramm gezeigte Balken zeigt, dass die Gasblasen des auf der x-Achse diesem Balken zugeordneten Durchmesserbereichs eine volumenbezogene Häufigkeit von etwa 24% aufweisen.

Das Diagramm zeigt, dass mit Hilfe der Messeinrichtung - im gezeigten Beispiel wurde hierzu ein herkömmlicher Partikelzähler eingesetzt - eine aussagekräftige Charakterisierung der Größenverteilung der Gasblasen möglich ist.

### Liste der verwendeten Bezugszeichen

- 10: Mikroflotationsanlage
- 12: Reaktorbehälter
- 14: Wasserzulauf
- 16: Gasleitung
- 18: Dispersionswasserauslauf
- 20: Klarwasserauslauf
- 22: Flotationsbecken
- 24: Pumpe
- 26: Dispersionswasserzulauf
- 28: Entspannungsventilanordnung
- 30: Abzweigleitung
- 32: Messeinrichtung
- 34: Schmutzwasserzulauf
- 36: Klarwasserauslauf
- 38: elektronische Steuerung
- 40: Räumeinrichtung
- 42: Gaspolster
- 44: Dispersionswasserzuleitung
- 46: Verstelleinrichtung

## Patentansprüche

1. Mikroflotationsanlage (10) mit
• einem Flotationsbecken (22), das eine Dispersionswasserzuleitung (44) aufweist, in der eine Entspannungsventilanordnung (28) angeordnet ist,
• einer Verstelleinrichtung (46), mit der eine Durchflussmenge der Entspannungsventilanordnung (28) einstellbar ist, und
• einer elektronischen Steuerung (38), die mit der Verstelleinrichtung (46) verbunden ist, **dadurch gekennzeichnet, dass**
• stromabwärts der Entspannungsventilanordnung (28) eine Messeinrichtung (32) zur Erfassung einer Größenverteilung von Gasblasen angeordnet ist und
• die elektronische Steuerung (38) mit der Messeinrichtung (32) verbunden und dazu ausgebildet ist, die Durchflussmenge in Abhängigkeit von einer mit der Messeinrichtung (32) erfassten Größenverteilung einzustellen.

2. Mikroflotationsanlage (10) nach Anspruch 1, **dadurch gekennzeichnet, dass** die elektronische Steuerung (38) dazu ausgebildet ist, die Durchflussmenge zu verringern, wenn die Größenverteilung ein vorgegebenes Größenmaß überschreitet.

3. Mikroflotationsanlage (10) nach Anspruch 1 oder 2, **dadurch gekennzeichnet, dass** die elektronische Steuerung (38) dazu ausgebildet ist, durch Steuern der Durchflussmenge die Größenverteilung auf ein vorgegebenes Soll-Größenmaß zu regeln.

4. Mikroflotationsanlage (10) nach einem der Ansprüche 1 bis 3, **dadurch gekennzeichnet, dass** die Messeinrichtung (32) einen Partikelzähler aufweist.

5. Mikroflotationsanlage (10) nach einem der Ansprüche 1 bis 4, **dadurch gekennzeichnet, dass** die Messeinrichtung (32) dazu ausgebildet ist, die Größenverteilung mittels Laserbeugung zu erfassen.

6. Mikroflotationsanlage (10) nach einem der Ansprüche 1 bis 5, **dadurch gekennzeichnet, dass** die Messeinrichtung (32) zwischen der Entspannungsventilanordnung (28) und einem Dispersionswasserzulauf (26) des Flotationsbeckens (22) angeordnet ist.

7. Mikroflotationsanlage (10) nach einem der Ansprüche 1 bis 6, **dadurch gekennzeichnet, dass** die Dispersionswasserzuleitung (46) eine Abzweigleitung (30) aufweist, durch die ein Teilstrom des Dispersionswassers geführt wird, und dass die Messeinrichtung (32) in der Abzweigleitung (30) angeordnet ist.

8. Mikroflotationsanlage (10) nach einem der Ansprüche 1 bis 7, **gekennzeichnet durch** einen Reaktorbehälter (12), der einen Wasserzulauf (14) aufweist und dazu ausgebildet ist, über den Wasserzulauf (14) zugeführtes Wasser unter erhöhtem Druck mit einem Gas anzureichern und das so gebildete Dispersionswasser an einem Dispersionswasserauslauf (18), der mit der Dispersionswasserzuleitung (44) verbunden ist, zur Verfügung zu stellen.

9. Mikroflotationsanlage (10) nach einem der Ansprüche 1 bis 8, **dadurch gekennzeichnet, dass** die Entspannungsventilanordnung (28) ein Entspannungsventil mit einem verstellbaren Öffnungsgrad und die Verstelleinrichtung (46) einen Stellantrieb aufweist, mit dem der Öffnungsgrad verstellbar ist.

10. Verfahren zum Betreiben einer Mikroflotationsanlage (10) mit den folgenden Schritten:
• Zuführen von Dispersionswasser über eine Entspannungsventilanordnung (28) in ein Flotationsbecken (22),
• Erfassen einer Größenverteilung von Gasblasen stromabwärts der Entspannungsventilanordnung (28) mit einer Messeinrichtung (32),
• automatisches Steuern einer Durchflussmenge der Entspannungsventilanordnung (28) in Abhängigkeit von der erfassten Größenverteilung.

11. Verfahren nach Anspruch 10, **dadurch gekennzeichnet, dass** die Durchflussmenge verringert wird, wenn die Größenverteilung ein vorgegebenes Größenmaß überschreitet.

12. Verfahren nach Anspruch 10 oder 11, **dadurch gekennzeichnet, dass** die Größenverteilung durch Steuern der Durchflussmenge auf ein vorgegebenes Soll-Größenmaß geregelt wird.

13. Verfahren nach einem der Ansprüche 10 bis 12, **dadurch gekennzeichnet, dass** das zugeführte Dispersionswasser in einen Teilstrom und einen Hauptstrom aufgeteilt wird und das Erfassen der Größenverteilung in dem Teilstrom erfolgt.

14. Verfahren nach einem der Ansprüche 10 bis 13, **dadurch gekennzeichnet, dass** zum Erfassen der Größenverteilung ein Laserbeugungsbild ausgewertet wird.

## Claims

1. A microflotation system (10) with
• a flotation tank (22) that has a dispersion water feed line (44) in which an expansion valve arrangement (28) is arranged,
• an adjusting apparatus (46) by means of which a flow rate of the expansion valve arrangement (28) can be adjusted, and
• an electronic control (38) that is connected to the adjusting apparatus (46), **characterized in that**
• a measuring apparatus (32) is arranged downstream from the expansion valve arrangement (28) for detecting a size distribution of gas bubbles, and
• the electronic control (38) is connected to the measuring apparatus (32) and is designed to set the flow rate depending on a size distribution detected with the measuring apparatus (32).

2. The microflotation system (10) according to claim 1, **characterized in that** the electronic control (38) is designed to reduce the flow rate when the size distribution exceeds a predetermined level.

3. The microflotation system (10) according to claim 1 or 2, **characterized in that** the electronic control (38) is designed to regulate the size distribution to a predetermined target level by controlling the flow rate.

4. The microflotation system (10) according to one of claims 1 to 3, **characterized in that** the measuring apparatus (32) has a particle counter.

5. The microflotation system (10) according to one of claims 1 to 4, **characterized in that** the measuring apparatus (32) is designed to detect the size distribution by means of laser diffraction.

6. The microflotation system (10) according to one of claims 1 to 5, **characterized in that** the measuring apparatus (32) is arranged between the expansion valve arrangement (28) and a dispersion water feed (26) of the flotation tank (22).

7. The microflotation system (10) according to one of claims 1 to 6, **characterized in that** the dispersion water feed line (46) has a branch line (30) through which a partial flow of the dispersion water is guided, and that the measuring apparatus (32) is arranged in the branch line (30).

8. The microflotation system (10) according to one of claims 1 to 7, **characterized by** a reactor tank (12) which has a water feed (14) and is designed to enrich water supplied by the water feed (14) with gas under an elevated pressure, and to provide the dispersion water formed in this manner to a dispersion water drain (18) connected to the dispersion water feed line (44).

9. The microflotation system (10) according to one of claims 1 to 8, **characterized in that** the expansion valve arrangement (28) has an expansion valve with an adjustable degree of opening, and the adjusting apparatus (46) has an actuator by means of which the degree of opening can be adjusted.

10. A method for operating a microflotation system (10) with the following steps:
• Supplying dispersion water through an expansion valve arrangement (28) into a flotation tank (22),
• Detecting a size distribution of gas bubbles downstream from the expansion valve arrangement (28) using a measuring apparatus (32),
• Automatically controlling a flow rate of the expansion valve arrangement (28) depending on the detected size distribution.

11. The method according to claim 10, **characterized in that** the flow rate is reduced when the size distribution exceeds a predetermined level.

12. The method according to claim 10 or 11, **characterized in that** the size distribution is regulated by controlling the flow rate to a predetermined target level.

13. The method according to one of claims 10 to 12, **characterized in that** the supplied dispersion water is divided into a partial flow and a main flow, and the size distribution is detected in the partial flow.

14. The method according to one of claims 10 to 13, **characterized in that** a laser diffraction pattern is evaluated to detect the size distribution.

## Revendications

1. Installation de micro-flottation (10) comprenant
• un bassin de flottation (22) présentant une conduite d'arrivée d'eau de dispersion (44), dans laquelle est disposé un système de soupapes de décompression (28),
• un dispositif de réglage (46) permettant de régler un débit du système de soupapes de décompression (28), et
• une commande électronique (38) reliée au dispositif de réglage (46) **caractérisée en ce que**
• un dispositif de mesure (32) destiné à déterminer une distribution de taille de bulles de gaz est disposé en aval du système de soupapes de décompression (28), et
• la commande électronique (38) est reliée au dispositif de mesure (32) et conçue pour régler le débit en fonction d'une distribution de taille déterminée par le dispositif de mesure (32).

2. Installation de micro-flottation (10) selon la revendication 1, **caractérisée en ce que** la commande électronique (38) est conçue pour réduire le débit lorsque la distribution de taille dépasse une taille prédéfinie.

3. Installation de micro-flottation (10) selon la revendication 1 ou 2, **caractérisée en ce que** la commande électronique (38) est conçue pour régler la distribution de taille sur une taille de consigne prédéfinie en commandant le débit.

4. Installation de micro-flottation (10) selon l'une des revendications 1 à 3, **caractérisée en ce que** le dispositif de mesure (32) présente un compteur de particules.

5. Installation de micro-flottation (10) selon l'une des revendications 1 à 4, **caractérisée en ce que** le dispositif de mesure (32) est conçu pour déterminer la distribution de taille à l'aide d'une diffraction laser.

6. Installation de micro-flottation (10) selon l'une des revendications 1 à 5, **caractérisée en ce que** le dispositif de mesure (32) est disposé entre le système de soupapes de décompression (28) et une entrée d'eau de dispersion (26) du bassin de flottation (22).

7. Installation de micro-flottation (10) selon l'une des revendications 1 à 6, **caractérisée en ce que** la conduite d'arrivée d'eau de dispersion (46) présente une conduite de dérivation (30) à travers laquelle est guidé un flux partiel de l'eau de dispersion, et **en ce que** le dispositif de mesure (32) est disposé dans la conduite de dérivation (30).

8. Installation de micro-flottation (10) selon l'une des revendications 1 à 7, **caractérisée par** une cuve de réacteur (12) présentant une entrée d'eau (14) et conçue pour enrichir de l'eau alimentée par l'entrée d'eau (14) avec un gaz sous une pression élevée, et pour mettre à disposition l'eau de dispersion ainsi formée au niveau d'une sortie d'eau de dispersion (18) reliée à la conduite d'arrivée d'eau de dispersion (44).

9. Installation de micro-flottation (10) selon l'une des revendications 1 à 8, **caractérisée en ce que** le système de soupapes de décompression (28) présente une soupape de décompression avec un degré d'ouverture réglable et le dispositif de réglage (46) présente un actionneur permettant de régler le degré d'ouverture.

10. Procédé de fonctionnement d'une installation de micro-flottation (10) comprenant les étapes suivantes :
• alimentation d'eau de dispersion dans un bassin de flottation (22) par le biais d'un système de soupapes de décompression (28),
• détermination d'une distribution de taille de bulles de gaz en aval du système de soupapes de décompression (28) à l'aide d'un dispositif de mesure (32),
• commande automatique d'un débit du système de soupapes de décompression (28) en fonction de la distribution de taille déterminée.

11. Procédé selon la revendication 10, **caractérisé en ce que** le débit est réduit lorsque la distribution de taille dépasse une taille prédéfinie.

12. Procédé selon la revendication 10 ou 11, **caractérisé en ce que** la distribution de taille est réglée en commandant le débit sur une taille de consigne prédéfinie.

13. Procédé selon l'une des revendications 10 à 12, **caractérisé en ce que** l'eau de dispersion alimentée est divisée en un flux partiel et un flux principal, et la détermination de la distribution de taille est réalisée dans le flux partiel.

14. Procédé selon l'une des revendications 10 à 13, **caractérisé en ce qu'**une image de diffraction laser est évaluée pour déterminer la distribution de taille.
